# EUROPÄISCHE PATENTSCHRIFT

(11) **EP 4 066 304 B1**
(45) Veröffentlichungstag und Bekanntmachung des Hinweises auf die Patenterteilung: **21.08.2024**
(21) Anmeldenummer: 20811995.8
(22) Anmeldetag: 20.11.2020
(51) Int. Cl.: H01M 10/052, H01M 10/0565

(54) **SEMI-INTERPENETRIERENDE POLYMERNETZWERKE AUF BASIS VON POLYCARBONATEN ALS SEPARATOREN FÜR DEN EINSATZ IN ALKALI-METALL-BATTERIEN**
SEMI-INTERPENETRATING POLYMER NETWORKS BASED ON POLYCARBONATES AS SEPARATORS FOR USE IN ALKALI-METAL BATTERIES
RÉSEAUX POLYMÈRES SEMI-INTERPÉNÉTRANTS À BASE DE POLYCARBONATES EN TANT QUE SÉPARATEURS POUR UNE UTILISATION DANS DES BATTERIES MÉTAL ALCALIN

(30) Priorität: 28.11.2019 DE 102019132370
(43) Veröffentlichungstag der Anmeldung: 05.10.2022
(73) Patentinhaber: Forschungszentrum Jülich GmbH, 52428 Jülich (DE)
(72) Erfinder: HOMANN, Gerrit, 48149 Münster (DE); KASNATSCHEEW, Johannes, 48249 Dülmen (DE); STOLZ, Lukas, 48161 Münster (DE); GRÜNEBAUM, Mariano, 59394 Nordkirchen (DE); WINTER, Martin, 48149 Münster (DE)
(74) Vertreter: Michalski Hüttermann & Partner Patentanwälte mbB
(86) Internationale Anmeldenummer: PCT/EP2020/082964
(87) Internationale Veröffentlichungsnummer: WO 2021/105023

(56) Entgegenhaltungen:
- CN-A- 107 768 717
- CN-A- 109 004 280

## Beschreibung

Die vorliegende Erfindung betrifft Festelektrolyt für eine Alkalimetall-Feststoffbatterie, wobei der Festelektrolyt eine Mischung zweier unterschiedlicher Alkalimetall-Leitsalze und ein semi-interpenetrierendes Netzwerk (sIPN) aus einem vernetzten und einem nicht-vernetzten Polymer umfasst, wobei das semi-interpenetrierende Netzwerk größer oder gleich 50 Gew.-% und kleiner oder gleich 80 Gew.-% eines nicht-vernetzten Polymers ausgesucht aus der Gruppe bestehend aus Polyethylenoxid (PEO), Polycarbonat (PC), Polycaprolacton (PCL), kettenendenmodifizierten Derivaten dieser Polymere oder Mischungen mindestens zweier Komponenten daraus; und größer oder gleich 10 Gew.-% und kleiner oder gleich 50 Gew.-% eines Polycarbonats aus vernetzbaren Polyalkyl-Carbonat-Monomeren mit einer Kohlenstoffanzahl von größer oder gleich 2 und kleiner oder gleich 15 bezogen auf das einzelne Monomer als vernetztes Polymer umfasst, wobei das einzelne Polyalkyl-Carbonat-Monomer substituiert oder unsubstituiert sein kann und zwei vernetzbare Gruppen ausgesucht aus der Gruppe bestehend aus acryl, methacryl, epoxy, vinyl, isocyanid oder Mischungen zweier unterschiedlicher Gruppen daraus umfasst. Des Weiteren betrifft die vorliegende Erfindung eine Alkali-Metall-Batterie mit einem erfindungsgemäßen Festelektrolyt.

Die gestiegenen Anforderungen der Nutzer an Nachhaltigkeit und Mobilität haben in den letzten Jahrzehnten die Landschaft der dezentralen Energiespeicher deutlich verändert. Waren in der Vergangenheit die Möglichkeiten der technischen Nutzung von Batterien aufgrund der Größe, des Gewichts und der nur sehr begrenzten elektrischen Kapazität deutlich eingeschränkt, so haben seit dem Einsatz von Alkalimetall basierten Energiespeichern, beispielsweise in Form wiederaufladbarer Lithiumbatterien, die Einsatzmöglichkeiten deutlich zugenommen. Seit Beginn ihrer Markteinführung Anfang der 90er Jahre haben Lithium-Ionen-Batterien die Massentauglichkeit mobiler Anwendungen wie Smartphones und Laptops erst ermöglicht. Kontinuierliche Weiterentwicklungen haben zudem zu einer Steigerung der Energiedichten und der Anwendungssicherheit geführt. Gerade diese Optimierungsschritte haben dazu beigetragen, dass beispielsweise Lithium-Ionen-Batterien heutzutage als stationäre Energiespeicher für dezentral erzeugte Elektrizität im Privat- und Industriebereich in Frage kommen. Des Weiteren bilden diese innovativen elektrischen Speicher die Grundlage neuer, klimafreundlicher Verkehrskonzepte im Bereich der Elektromobilität.

Für sekundäre Alkali-Batterien sind neben den Batterien mit Flüssigelektrolyten auch polymerbasierte Feststoffbatterien mit hochviskosen "festen" Elektrolyten bekannt. Üblicherweise liegen die optimalen Betriebstemperaturen dieser Typen im Bereich um die 60°C, jedoch wird eine Ausweitung des möglichen Arbeitstemperaturfensters hin zu tieferen Temperaturen, beispielsweise in einen Temperaturbereich um die 40°C oder gar 20°C angestrebt. Der populärste Vertreter dieser Elektrolytklasse ist Polyethylenoxid (PEO), welches unter Nutzung mindestens eines Lithium-Leitsalzes zwar als oxidativ instabil (über 3.9 V vs. Li/Li+) angenommen wird, aber einen günstigen und leicht verfügbaren Standard darstellt. Da PEO einfach zu verarbeiten und auch in industriellem Maßstab problemlos herstellbar ist, werden viele Bestrebungen unternommen, Polymerelektrolyte auf PEO-Basis herzustellen. Üblicherweise wird als positive Elektrode Lithium-Eisen-Phosphat (LFP) eingesetzt, da dieses Elektrodenmaterial eine hinreichend gute Kompatibilität zu PEO aufweist.

Bei Einsatz von PEO als Polymerelektrolyt kommt es selbst bei einer Betriebstemperatur von 60°C oberhalb von 3,9 V nach wiederholten Lade-/Entladezyklen zu Kurzschlüssen der Batteriezellen. Diese Situation wird für Hochspannungs-Elektroden, beispielsweise mit NMC-Elektroden (Lithium-Nickel-Mangan-Cobalt-Oxid), noch ungünstiger, da im Elektrolyten und an der Elektrode inhomogene Ladungszustände auftreten. Auch ist bekannt, das PEO-Leitsalz-Kombinationen ohne weitere Zusätze verschiedene kristalline und amorphe Phasen aufweisen, welche einen inhomogenen Li-Ionen-Transport wahrscheinlich machen. Diese Faktoren stehen einer ungehinderten kommerziellen Nutzung von Festelektrolyten in einem breiten Temperaturbereich und mit Hochvolt-Elektroden zur Zeit noch entgegen.

Auch in der Patentliteratur finden sich einige Ansätze zur Verbesserung von Alkali-Festelektrolyten.

So offenbart beispielsweise die WO 2014 147 648 A1 eine Elektrolytzusammensetzungen mit hoher Ionenleitfähigkeit. Das Dokument offenbart insbesondere hochionische Leitfähigkeitselektrolytzusammensetzungen von semi-interpenetrierenden Polymernetzwerken und deren Nanokompositen als Quasi-Fest-/Festelektrolytmatrix für Energieerzeugungs-, Speicher- und Abgabevorrichtungen, insbesondere für Hybridsolarzellen, Akkumulatoren, Kondensatoren, Elektrochemikalien Systeme und flexible Geräte. Die binäre oder ternäre Komponente einer semi-interpenetrierenden Polymernetzwerkelektrolytzusammensetzung umfasst: a) ein Polymernetzwerk mit Polyethergrundgerüst (Komponente I); b) ein lineares, verzweigtes, hyperverzweigtes Polymer mit niedrigem Molekulargewicht oder eine beliebige binäre Kombination solcher Polymere mit vorzugsweise nicht reaktiven Endgruppen (Komponente II und / oder Komponente III zur Bildung eines ternären semi-IPN-Systems); c) ein Elektrolytsalz und/oder ein Redoxpaar und gegebenenfalls d) ein reines oder oberflächenmodifiziertes nanostrukturiertes Material zur Bildung eines Nanokomposits.

Die WO 2015 043 564 A1 offenbart ein Verfahren zur Herstellung wenigstens einer elektrochemischen Zelle einer Festkörperbatterie, umfassend eine mischleitende Anode, eine mischleitende Kathode, sowie eine zwischen Anode und Kathode angeordneten Elektrolytschicht, mit den Schritten,
- eine mischleitende Anode wird hergestellt oder bereitgestellt,
- eine mischleitende Kathode wird hergestellt oder bereitgestellt,
- die Oberfläche wenigstens einer der beiden Elektroden wird durch einen zusätzlichen Verfahrensschritt derart modifiziert, dass in einer oberflächennahen Schicht der Elektrode die elektronische Leitfähigkeit senkrecht zur Zelle auf weniger als 10⁸ S/cm abgesenkt wird, und
- im Anschluss werden die Anode und die Kathode derart zu einer Festkörperbatterie zusammengebaut, dass die oberflächenmodifizierte Schicht wenigstens einer Elektrode an der Grenze zwischen Anode und Kathode als Elektrolytschicht angeordnet wird, und so die mischleitenden Elektroden dadurch elektronisch getrennt werden.

In einem weiteren Patentdokument, der CN 109 004 280 A wird ein Herstellungsverfahren für einen Festkörperpolymerelektrolyten und eine Festkörperpolymerbatterie offenbart. Die Herstellungsschritte des Elektrolyten sind wie folgt: Polymerisieren eines Polycarbonatmonomers mit einem Carboxyl- oder Hydroxylpolycarbonatmonomer, um ein Polymer A zu erhalten; Hinzufügen von Polyethermonomer, Polyethylenglykolpropylenmonomer und funktionellem Polymer zu einem Lösungsmittel, Hinzufügen von Lithiumsalz, Initiator, selektives Hinzufügen von Hilfsmittel und funktionellem Füllstoff, und Ausführen einer Initiierungsreaktion, um Polymer B zu erhalten; Hinzufügen von Polymer A und Polymer B zu einem Lösungsmittel und selektives Hinzufügen von Carboxylvernetzungsmittel, um sich gleichförmig zu mischen, um ein Polymermischsystem zu erhalten; das Hydroxylvernetzungsmittel wird zu dem Polymermischsystem hinzugefügt und gleichförmig gemischt, die erhaltene gemischte Flüssigkeit wird gleichförmig auf eine Form beschichtet, und die Vernetzungsreaktion wird unter einer Inertgasatmosphäre in einem Vakuumtrocknungskasten ausgeführt; an diesem Ende der Reaktion wird die Polymerelektrolytmembran in einer Inertgasatmosphäre vakuumgetrocknet, um eine vollständig feste Polymerelektrolytmembran zu erhalten.

Zudem offenbart die CN 107 768 717 A ebenfalls Festelektrolyte und Verfahren zu deren Herstellung.

Derartige aus dem Stand der Technik bekannte Lösungen können noch weiteres Verbesserungspotential bieten, insbesondere hinsichtlich einer verbesserten Reproduzierbarkeit von Ladungs- und Entladungsvorgängen sekundärer Alkali-Batterien.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung eine Lösung bereitzustellen, durch welche auch nach wiederholten Zyklen eine verbesserte Lade- und Entladestabilität bereitgestellt wird.

Die Lösung der Aufgabe erfolgt erfindungsgemäß durch einen Festelektrolyt mit den Merkmalen des Anspruchs 1. Die Lösung der Aufgabe erfolgt ferner erfindungsgemäß durch eine Alkali-Metall-Batterie nach Anspruch 9. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, solange sich aus dem Kontext nicht eindeutig das Gegenteil ergibt.

Erfindungsgemäß ist ein Festelektrolyt für eine Alkalimetall-Feststoffbatterie, wobei der Festelektrolyt eine Mischung zweier unterschiedlicher Alkalimetall-Leitsalze und ein semi-interpenetrierendes Netzwerk (sIPN) aus einem vernetzten und einem nicht-vernetzten Polymer umfasst, wobei das semi-interpenetrierende Netzwerk größer oder gleich 50 Gew.-% und kleiner oder gleich 80 Gew.-% eines nicht-vernetzten Polymers ausgesucht aus der Gruppe bestehend aus Polyethylenoxid (PEO), Polycarbonat (PC), Polycaprolacton (PCL), kettenendenmodifizierten Derivaten dieser Polymere oder Mischungen mindestens zweier Komponenten daraus; und größer oder gleich 10 Gew.-% und kleiner oder gleich 50 Gew.-% eines Polycarbonats aus vernetzbaren Polyalkyl-Carbonat-Monomeren mit einer Kohlenstoffanzahl von größer oder gleich 2 und kleiner oder gleich 15 bezogen auf das einzelne Monomer als vernetztes Polymer umfasst, wobei das einzelne Polyalkyl-Carbonat-Monomer substituiert oder unsubstituiert sein kann und zwei vernetzbare Gruppen ausgesucht aus der Gruppe bestehend aus acryl, methacryl, epoxy, vinyl, isocyanid oder Mischungen zweier unterschiedlicher Gruppen daraus umfasst.

Überraschend wurde festgestellt, dass obiger Aufbau eines Festelektrolyten aus einem semi-interpenetrierenden Netzwerk auf Basis vernetzter Polycarbonate und unvernetztem PEO in Verbindung mit einem doppelten Leitsalz ("dual salt") zu deutlich verbesserten Eigenschaften für den daraus gebildeten Festelektrolyten führt. Der Festelektrolyt verfügt, im Gegensatz zu einem reinen Festelektrolyten auf Basis von PEO, über eine deutlich größere mechanische Stabilität. Die größere mechanische Stabilität in Kombination mit dem doppelten Leitsatz führt zudem dazu, dass die elektrischen Eigenschaften des Festelektrolyten und mit diesen gefertigter Batterien, deutlich reproduzierbarer sind, als die von Batterien, welche entweder nur auf Polyethylenoxid basieren oder aber nur ein einziges Leitsalz aufweisen. Die unter gleichen elektrischen Bedingungen erreichbare Zykluszahl und die Standzeit von Batterien wird durch den erfindungsgemäßen Aufbau insofern deutlich erhöht. Des Weiteren ist an diesem Festelektrolyten vorteilhaft, dass dieser mit verbesserten Eigenschaften auch in einem tieferen Temperaturfenster betrieben werden kann. Ohne durch die Theorie gebunden zu sein, scheint die annähernd gleiche Polarität der erfindungsgemäß eingesetzten Polycarbonate zum PEO ausschlaggebend für eine sehr gute Mischbarkeit zu sein, welches zu einer besonders homogenen Durchmischung und letztendlich zur Ausbildung stabiler und homogener Netzwerke führt. Gleichzeitig weisen Carbonat-Gruppen eine schwache Koordination zu Alkali-Ionen auf, was dazu führt, dass die Alkali-Ionen der Leitsalze primär an dem zugefügten Alkali-Ionen-leitenden Polymerelektrolyten, z.B. PEO, koordinieren und nicht an dem relativ unflexiblen Carbonat-Rückgrat des Netzwerkformers zurückgehalten werden.

Der erfindungsgemäße Festelektrolyt ist ein Festelektrolyt für eine Alkalimetall-Feststoffbatterie. Ein Festelektrolyt wird auch Festkörperelektrolyt, Feststoffelektrolyt oder fester Ionenleiter genannt. Der Festelektrolyt weist eine zusammenhängende polymere Trägerstruktur und darin eingebettete Alkalimetall-Ionen auf, welche innerhalb der polymeren Matrix des Festelektrolyten beweglich sind. Über die Beweglichkeit der Ionen im Festelektrolyt kann ein elektrischer Strom fließen. Festelektrolyte sind elektrisch leitend, zeigen aber verglichen mit Metallen eine eher geringe elektronische Leitfähigkeit. Eine Alkalimetall-Feststoffbatterie weist mindestens zwei Elektroden und einen zwischen den Elektroden angeordneten festen, insbesondere nicht fließfähigen Elektrolyten auf. Neben diesen Bestandteilen kann eine Feststoffbatterie noch weitere Schichten oder Lagen aufweisen. Beispielsweise kann eine Feststoffbatterie noch weitere Lagen zwischen dem Festelektrolyt und den Elektroden aufweisen. Die elektrischen Eigenschaften von Alkalimetall-Feststoffbatterien basieren auf der Redoxreaktion von Alkalimetallen, also den Metallen aus der 1. Hauptgruppe des Periodensystems. Insbesondere als Alkalimetalle lassen sich Lithium, Natrium und Kalium einsetzten.

Der erfindungsgemäße Festelektrolyt weist eine Mischung zweier unterschiedlicher Alkalimetall-Leitsalze auf. Die Alkali-Metall-Leitsalze bestehen im Wesentlichen aus Alkali-MetallKationen und anorganischen oder organischen Anionen. Für die Ausbildung einer Mischung zweier unterschiedlicher Alkalimetall-Leitsalze ist es im Sinne der Erfindung ausreichend, wenn die beiden Leitsalze gleiche Kationen aber unterschiedliche Anionen aufweisen. Insofern kann der erfindungsgemäße Festelektrolyt nur eine Kationen-Spezies, beispielsweise Lithium, hingegen aber zwei unterschiedliche Anionen umfassen. Die eingesetzten Mengen der beiden unterschiedlichen Alkali-Metall-Leitsalze müssen nicht äquimolar sein. Es ist auch möglich, dass die beiden unterschiedlichen Alkali-Metall-Leitsalze in unterschiedlichen Konzentrationen eingesetzt werden. Im Sinne der Erfindung liegt eine Mischung zweier unterschiedlicher Alkalimetall-Leitsalze vor, wenn eines der beiden Alkali-Metall-Leitsalze mindestens 10 mol %, bevorzugt 15 mol %, bevorzugt 20 mol % der gesamten Menge an Alkali-Metall-Leitsalz ausmacht. Mögliche Anionen können ausgesucht sein aus der Gruppe bestehend aus Hexafluorophosphate, Perchlorate, Tetrafluoroborate, Tris(pentafluoroethyl)trifluorophosphate, Trifluoromethanesulfonate, bis(fluorosulfonyl)-imide, bis(fluoromethansulfonyl)imide, bis(perfluoroethanesulfonyl)imide, bis(oxalate)borate, difluoro(oxalato)borate, bis(fluoromalonato)borate, tetracyanoborate, dicyanotriazolate, dicyano-trifluoromethyl-imidazole, dicyano-pentafluoroethyl-imidazole, fluorosulfonyl-(tri-fluoromethansulfonyl)imide oder Mischungen mindestens zweier Komponenten daraus. Weiterhin kann mindestens eines der eingesetzten Leitsalze ein Anion mit vernetzbarer Funktionalisierung, beispielsweise eine Methacrylat-Gruppe, enthalten.

Der Festelektrolyt umfasst ein semi-interpenetrierendes Netzwerk (sIPN) aus einem vernetzten und einem nicht-vernetzten Polymer. Das mechanische Grundgerüst des Festelektrolyten wird durch ein Netzwerk zweier unterschiedlicher Polymere gebildet und erhält auch durch dieses seine Festigkeit. Ein semi-interpenetrierendes Netzwerk ist dabei ein Netzwerk, welches zwei unterschiedliche Polymerspezies aufweist. Das eine Polymer lässt sich unter Ausbildung kovalenter Bindungen zwischen den Monomeren zu einem drei-dimensionalen Netzwerk vernetzten, wohingegen das andere Polymer, mangels funktioneller Gruppen, rein über ionische oder van-der-Waals-Wechselwirkungen verknüpft ist. Beide Polymerbestandteile lassen sich, zumindest prinzipiell, über einen Auswaschvorgang voneinander trennen. Aufgrund der Tatsache, dass die Vernetzung des durch funktionelle Gruppen vernetzbaren Polymers erst nach einem physikalischen Mischvorgang mit dem nicht vernetzbaren Polymer erfolgt, durchdringen sich beide Komponenten physikalisch und bilden gemeinsam das semi-interpenetrierende Netzwerk. Die weiteren Bestandteile des Festelektrolyten bilden die Alkalimetall-Leitsalze, welche innerhalb des Netzwerkes "gelöst" oder an diesem gebunden vorliegen, aber erfindungsgemäß nicht als Bestandteil des semi-interpenetrierenden polymeren Netzwerkes aber als Bestandteil des Festelektrolyten angesehen werden.

Das semi-interpenetrierende Netzwerk umfasst größer oder gleich 50 Gew.-% und kleiner oder gleich 80 Gew.-% eines nicht-vernetzten Polymers ausgesucht aus der Gruppe bestehend aus Polyethylenoxid (PEO), Polycarbonat (PC), Polycaprolacton (PCL), kettenendenmodifizierten Derivaten dieser Polymere oder Mischungen mindestens zweier Komponenten daraus. Das aus zwei polymeren Komponenten aufgebaute semi-interpenetrierende Netzwerk weist somit als Hauptgewichtskomponente PEO, PC, PCL oder Mischungen dieser Komponenten auf. Diese nicht vernetzbaren und im Netzwerk nicht vernetzt vorliegenden Polymere können an den Kettenenden jeweils durch funktionelle Gruppen substituiert sein.

Unter PEO werden Monomere mit folgender Strukturformel verstanden 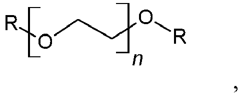 wobei der Index n zweckmäßigerweise von 10 bis 120000 gewählt werden kann. Die Reste R können jeweils unabhängig voneinander für Wasserstoff, einen substituierten oder nicht-substituierten Alkyl- oder Arylrest stehen. Die substituierten oder nicht-substituierten Alkyl- oder Arylreste können eine C-Anzahl von C1 bis C20 aufweisen und weitere, nicht vernetzbare funktionale Substituenten, wie beispielsweise Halogen, OH, NH₃, NO₂ aufweisen.

Unter Polycarbonaten werden Verbindungen folgender Strukturformel verstanden 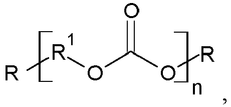 wobei der Index n zweckmäßigerweise von 3 bis 120000 gewählt werden kann. Die Reste R an den Kettenenden entsprechen der oben genannten Definition. Die Gruppe R¹ steht für eine aromatische oder aliphatische C1-C15-Gruppe.

Unter Polycaprolacton werden Verbindungen folgender Strukturformel verstanden 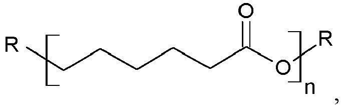 wobei der Index n zweckmäßigerweise von 3 bis 120000 gewählt werden kann. Die Reste R an den Kettenenden entsprechen der oben genannten Definition.

Als weitere Komponente weist das sIPN zu größer oder gleich 10 Gew.-% und kleiner oder gleich 50 Gew.-% eines Polycarbonats aus vernetzbaren Polyalkyl-Carbonat-Monomeren mit einer Kohlenstoffanzahl von größer oder gleich 2 und kleiner oder gleich 15 bezogen auf das einzelne Monomer als vernetztes Polymer auf. Die vernetzbare Komponente des semi-interpenetrierenden Netzwerkes umfasst also Carbonat-Monomere, welche über funktionale Gruppen im Monomer miteinander vernetzt werden können. Auf diese Art und Weise kann innerhalb des semi-interpenetrierenden Netzwerkes eine unlösliche, kovalente vernetzte Struktur ausgebildet werden, welche die mechanische Stabilität des Netzwerkes erhöhen kann. Bevorzugt kann ein Carbonat-Monomer zwei vernetzbare Gruppen, insbesondere zwei vernetzbare endständige Gruppen tragen. Es ist aber auch möglich, dass das Carbonat-Monomer mehr als zwei funktionale Gruppen aufweist. Die oben angegebene Gewichtsrelationen bezieht sich dabei auf die Komponenten des semi-interpenetrierenden Netzwerkes und umfasst insbesondere nicht die Anteile des Festelektrolyten, welche über die Alkali-Metall-Leitsalze eingebracht werden. Mögliche Polycarbonat-Grund-Monomere, ohne funktionale Gruppen, sind beispielsweise geradkettige oder verzweigte Alkyl-Polycarbonate mit einer Kohlenstoffzahl bis zu 15 zwischen den Carbonat-Gruppen. Das Molekulargewicht der Polyalkyl-Carbonat-Monomere kann zwischen 100 g/mol und 5000 g/mol ohne die vernetzende Funktionalisierung betragen.

Das einzelne Polyalkyl-Carbonat-Monomer kann substituiert oder unsubstituiert sein und zwei vernetzbare Gruppen ausgesucht aus der Gruppe bestehend aus acryl, methacryl, epoxy, vinyl, isocyanid oder Mischungen zweier unterschiedlicher Gruppen daraus umfassen. Die Polyalkyl-Carbonat-Monomeren können also solche, noch weitere funktionale Gruppen, wie beispielsweise OH, NH₃, CHO-Gruppen tragen. Neben dieser allgemeinen Substitution des Grundgerüst des Monomers, weist das Polyalkyl-Carbonat-Monomer jedoch mindestens zwei vernetzbare funktionelle Gruppen aus oben angegebenen funktionellen Gruppen auf. Durch diese funktionellen Gruppen erfolgt die Ausbildung kovalenter Bindungen zwischen den einzelnen Polycarbonat-Monomeren.

In einer bevorzugten Ausführungsform des Festelektrolyten kann der Gewichtsanteil des vernetzten zum unvernetzten Polymer im sIPN größer oder gleich 20 Gew.-% und kleiner oder gleich 40 Gew.-% betragen. Die Konzentration und Mischbarkeit der Einzelkomponenten spielt eine wichtige Rolle um eine ausreichend stabile, schwammartige Struktur des Netzwerkformers innerhalb der Polymerfolie zu erzeugen. So werden ab oben angegebenen Konzentrationsbereich von über 20 Gew.-% Polycarbonat-Netzwerkformer (bezogen auf PEO) deutlich erhöhte Reproduzierbarkeiten gegenüber dem reinen PEO-Leitsalz-Standard beobachtet. Weiterhin kann eine durch den Einsatz von Polykarbonat-Netzwerkformern eventuell verminderte Gesamtleitfähigkeit durch die Erhöhung des Salzgehaltes soweit kompensiert werden, dass bei 60°C keine Kapazitätsverluste durch erhöhte Zellwiderstände gegenüber reinen PEO-Leitsalz-Kombinationen erhalten werden.

Innerhalb einer bevorzugten Ausgestaltung des Festelektrolyten kann das Molekulargewicht der Polyalkyl-Carbonat-Monomere größer oder gleich 100 g/mol und kleiner oder gleich 3500 g/mol betragen. Die Untersuchung verschiedener Kettenlängen der Polyalkyl-Carbonat-Monomere hat ergeben, dass eine verbesserte elektrochemische Leistung mit geringeren Kettenlängen der Polyalkyl-Carbonat-Monomere erzielt werden kann. Anscheinend ist die Stabilität des sIPNs mit kürzeren Kettenlängen höher und dadurch können durch Quetschung hervorgerufene Kurzschlüsse von Batterieaufbauten mit dem erfindungsgemäßen Festelektrolyt vermieden werden.

Im Rahmen eines bevorzugten Aspektes des Festelektrolyten können die Polyalkyl-Carbonat-Monomere aus der Gruppe bestehend aus geradkettigen oder verzweigten, substituierten oder nicht-substituierten Polyethylen-, Polymethylen-, Polypropylen-, Polybutylen-, Polyhexylen-Carbonaten oder Mischungen mindestens zweier Komponenten daraus ausgesucht sein. Beispiele für diese Polyalkyl-Carbonat-Monomere können Polyethylen-Carbonat (PEC), Polypropylen-Carbonat (PPC) oder Polytrimethylen-Carbonate (PTMC) mit jeweils einem Molekulargewicht im Bereich von 500 g/mol bis zu 5000 g/mol sein. Bevorzugt kann das Molekulargewicht der Polyalkyl-Carbonat-Monomere im Bereich von 500 g/mol bis zu 2000 g/mol liegen. Durch diese Alkyl-Polyalkyl-Carbonat-Monomere können besonders bevorzugte mechanische Eigenschaften der Matrix und besonders geeignet elektrische Eigenschaften des Festelektrolyten bereitgestellt werden.

Innerhalb einer bevorzugten Ausführungsform des Festelektrolyten können die Polyalkyl-Carbonat-Monomere jeweils zwei gleiche funktionelle Gruppen tragen und die funktionelle Gruppe eine Methacryl-Gruppe sein. Für den Erhalt besonders mechanisch stabiler semiinterpenetrierender Netzwerke hat sich eine symmetrische Funktionalisierung der Polyalkyl-Carbonat-Monomere über zwei Methacryl-Gruppen als besonders geeignet herausgestellt. Das einzelne Monomer trägt insofern zwei Methacryl-Gruppen, bevorzugt zwei endständige Methacryl-Gruppen. Durch die besondere mechanische Stabilität der sich ausbildenden semi-interpenetrierende Netzwerke kann die Standzeit des Festelektrolyten deutlich erhöht werden.

Innerhalb einer bevorzugten Charakteristik des Festelektrolyten kann die Mischung zweier unterschiedlicher Alkalimetall-Leitsalze mindestens die Salze Alkali-(fluorosulfonyl)(tri-fluoromethansulfonyl)imide (FTFSI) und Alkali-bis(trifluoromethansulfonyl)imid) (TFSI) umfassen. Die Kombination beider oben genannter Alkalimetall-Leitsalze hat sich zum Erhalt besonders langlebiger und effizienter Batterien als besonders geeignet herausgestellt. Die Festelektrolyte zeigen eine ausgezeichnete Leitfähigkeit und die Zeitspannen bis zum elektrischen Versagen von Batterieaufbauten mit diesen Festelektrolyten konnte deutlich verlängert werden. Besonders geeignete Mischungen beider Leitsalze weisen einen Anteil von FTFSI zwischen 0,1 Gew.-% und 5 Gew.-% und einen Anteil von TFSI von 15 Gew.-% bis 60 Gew.-% bezogen auf das Gewicht des sIPNs inklusive der Leitsalze auf. Insbesondere kann der Anteil beider Leitsalze von 5 Gew.-% bis zu 70 Gew.-% bezogen auf das Gewicht des sIPNs inklusive der Leitsalze betragen. Weiterhin haben sich Leitsalze mit vernetzbarem Anion als besonders vorteilhaft herausgestellt, da die elektrostatischen Wechselwirkungen zwischen dem sIPN und dem immobilisierten Anion einer übermäßigen Verformung des sIPN entgegenwirken können. Der Einsatz vernetzbarer Leitsalze in dem erfindungsgemäß aufgebauten sIPN stellt einen besonderen Vorteil dar, da durch diesen Zusatz die Ausbildung einer hochgradig amorphen, kationen-leitenden Polymerphase noch weiter unterstützt wird. Die Ausbildung solch mechanisch stabiler, amorpher Strukturen ist mit den Zusammensetzungen nach dem Stand der Technik nicht realisierbar.

Im Rahmen eines weiteren, bevorzugten Aspektes des Festelektrolyten kann das Gewichtsverhältnis von Alkali-(fluorosulfonyl)(trifluoromethansulfonyl)imide (FTFSI) zur Gewichtssumme aus den Komponenten des sIPN und dem weiteren Leitsalz, ausgedrückt als Gewicht des Alkali-FTFSI dividiert durch die Summe der Gewichte aus sIPN und weiteren Leitsalz, größer oder gleich 0,005 und kleiner oder gleich 0,1 betragen. Innerhalb dieses Verhältnisses aus FTFSI und sIPN inklusive dem weiteren Leitsalz lassen sich besonders günstige elektrische Eigenschaften des Festelektrolyten mit langen Standzeiten erhalten. In einer weiter bevorzugten Ausführungsform kann das Verhältnis größer oder gleich 0,01 und kleiner oder gleich 0,075 betragen. Die Carbonyl-Gruppen des Netzwerkformers weisen insgesamt eine schwächere Affinität zu dem Li⁺ im Elektrolyten als das lineare PEO Polymer auf, wodurch die Koordination von Li⁺ bevorzugt am linearen PEO Polymer stattfindet. Dies ermöglicht den Einsatz geringerer Salzkonzentration gegenüber reinen Polyethern oder Polyethern als Netzwerkformer unter Verwendung gleicher Salzkonzentrationen.

In einer weiteren, bevorzugten Ausführungsform kann der Festelektrolyt ein Festelektrolyt für eine Li-Feststoffbatterie sein. Durch die verbesserten mechanischen und elektrischen Eigenschaften des Festelektrolyten eigenen sich die erfindungsgemäßen Festelektrolyte besonders für die elektrisch hoch anspruchsvolle Anwendungen in Lithium-basierenden Batterietypen.

Des Weiteren erfindungsgemäß ist eine Alkali-Metall-Batterie aufweisend eine Anode, eine Kathode und einen zwischen Anode und Kathode angeordneten Festelektrolyten, wobei der Festelektrolyt ein erfindungsgemäßer Festelektrolyt ist. Für die Vorteile der erfindungsgemäßen Alkali-Metall-Batterien wird explizit auf die Vorteile des erfindungsgemäßen Verfahrens und des erfindungsgemäßen polymeren Festelektrolyten Bezug genommen. Die Batterien können neben den erwähnten Bestandteilen generell noch weitere Schichten aufweisen.

Für die positive Elektrode der Alkali-Metall-Batterie in einer Ausgestaltung als Li-Metall-Batterie können Materialien für All-Solid-State Lithium-Ionen-Batterien oder Lithium-Metall-Batterien eingesetzt werden. Die Elektrodenschicht umfasst dabei beispielsweise Aktivmaterialien wie LiNiₓMn_{y}Co_{z}O₂ (NMC), LiCoO₂ (LCO), LiFePO₄ (LFP) oder LNiₓMn_{y}O₄ (LNMO). Zudem kann die positive Elektrode darüber hinaus auch noch Binder, elektronisch leitendes Material zur Erhöhung der elektronischen Leitfähigkeit, z. B. Azetylen Schwarz, Ruß, Graphit, Kohlefaser und Kohlenstoffnanoröhrchen, sowie Elektrolytmaterial, insbesondere ein Polymer oder Festelektrolyt, zur Erhöhung der Ionenleitfähigkeit, sowie weitere Additive umfassen.

Im Rahmen einer bevorzugten Ausführungsform der Alkali-Metall-Batterie kann die Batterie eine Li-Metall-Batterie sein und die Batterie mindestens eine Hochstrom- oder Hochspannungs-Elektrode aufweisen. Die Eignung ergibt sich insbesondere aufgrund der hohen mechanischen Festigkeit, sowie auf der Tatsache, dass der Festelektrolyt auch für den Einsatz mit Hochstrom- oder Hochspannungselektroden geeignet ist. Hochstromelektroden sind dabei Elektroden welche eine spezifische Kapazität von über 100 mAh g⁻¹ bei einer Ladedauer von kleiner gleich 15 Stunden bereitstellen können. Hochvoltelektroden können eine Ladeschlussspannung von ≥ 4V bereitstellen.

In einer weiter bevorzugten Ausführungsform kann der erfindungsgemäße Festelektrolyt in elektrochemischen Geräten eingesetzt werden. Zu den elektrochemischen Geräten können neben den primären und sekundären Batterien auch Brennstoffzellen oder Kondensatoren fallen. Des Weiteren kann der erfindungsgemäße Festelektrolyt in elektrochemischen Geräten als Schicht zu Verbesserung der elektrischen Kontaktierung ("Benetzung") von Elektroden eingesetzt werden.

Neben dem Einsatz als Polymerelektrolyt-Trennschicht in Lithium-Metall-Batterien, bei denen der erfindungsgemäße Polymer-Elektrolyt direkten Kontakt zur Kathode hat, ist auch der Einsatz in Sulfid-basierten Festelektrolytzellen möglich. Dieses Zellkonzept lässt sich auch auf Oxid-basierte Keramiken übertragen, bei denen der Polymer-Elektrolyt als Benetzungshilfe zur Lithium-Metall-Seite fungieren kann. Auch der Einsatz mehrerer verschiedener Polymerschichten für Anode und Kathode ist möglich. Alternativ zur thermischen radikalischen Polymerisation ist auch eine Photopolymerisation denkbar, bei dem eine UV-Lichtquelle eingesetzt wird um die Polymerisation zu initiieren. Auch die Zugabe kurzkettiger Polyethylenglykol-Derivate zur Ermöglichung einer geringeren Betriebstemperatur. Mit dem erfindungsgemäßen sIPN können auch andere Beschichtungssubstrate wie siloxiertes Papier, Polyethylene/Polypropylen-Folien, PTFE oder auch Glas oder chemisch Oberflächen wie modifiziertes Glas ausgerüstet werden.

### Beispiele:

### I. Herstellung der Festelektrolyte

Es wird eine sIPN für eine Li-Batterie hergestellt.

### I.a. Synthese des Polycarbonat-Netzwerkformers

Die Synthese des Polycarbonat-Netzwerkformers wird unter Schutzgas durchgeführt. 10g Poly(1,6-hexandiol)carbonat-diol (Mw = 1000 g/mol) werden in trockenem Dichlormethan (100 mL) gelöst. Zur Trocknung des Polycarbonats wird ca. 0,5 g Magnesiumsulfat hinzugegeben und die Mischung über Nacht gerührt. Die Mischung wird filtriert, um das Magnesiumsulfat zu entfernen. Anschließend wird DMAP (4-(dimethylamino)pyridin) (0,001 mol% pro terminaler Hydroxylgruppe), sowie Triethylamin (2 Äquivalente bezogen auf die terminalen Hydroxylgruppen) hinzugegeben. Unter Rühren und Kühlung auf 0°C wird Methacryloyl-Chlorid (1,2 Äquivalente bezogen auf die terminalen Hydroxylgruppen) vorsichtig hinzugetropft. Das Reaktionsgemisch wird für drei Tage bei Raumtemperatur gerührt. Das Rohprodukt wird 5 mal mit 2M wässriger HCl-Lösung gewaschen (5 x 50 mL), um aus der organischen Phase die polaren Edukte und Nebenprodukte der Reaktion zu extrahieren. Zur Phasenseparation wird ein Scheidetrichter verwendet. Die organische Phase wurde über Magnesiumsulfat getrocknet und das Lösungsmittel unter vermindertem Druck entfernt. Das Produkt wird mehrere Tage unter Vakuum bei RT getrocknet. Das getrocknete Produkt wird unter Schutzgas gelagert.

### I.b. Herstellung eines erfindungsgemäßen sIPNs

Die Leitsalz-Kombination im molaren Verhältnis von 13 Teilen Li-TFSI (0,289 g) zu 1 Teil Li-FTFSI (0.018 g) wird zusammen mit Polycarbonat (Poly(1,6-hexandiol)carbonat-dimethacrylate) (0,125 g) und dem Radikalstarter AIBN (Azobisisobutyronitrile) (0,018 g) in 3 mL Acetonitril oder THF als Lösungsmittel aufgelöst und anschließend das PEO-Pulver (0.5 g) hinzugefügt. Die Mischung mit einem Leitsalz zu Polymer-Verhältnis von 1 zu 3 wird für mehrere Stunden gerührt und kann nach vollständiger Homogenisierung mittels Foliengießen in prinzipiell beliebigen Dicken auf eine Mylar-Folie appliziert werden. Das Lösungsmittel wird in einem Abzug verdampft, die erzeugte Polymerfolie bei 70°C unter Stickstoff-Strom für eine Stunde polymerisiert und anschließend über Nacht unter Vakuum getrocknet. Mögliche Dicken für den Festelektrolyt ergeben sich von größer oder gleich 1 µm bis zu kleiner oder gleich 500 µm.

### I.c. Herstellung einer Batterie

Für den Einsatz in Lithium-Metall-Batteriezellen wird ein rundes Stück Polymerfolie mit 200 µm Höhe und 17 mm Durchmesser ausgestanzt und analog zu einem Separator zwischen Lithium Metall Elektrode und positiver Elektrode bestehend aus 91 Gew.-% Li-Ni_{0.6}Mn_{0.2}Co_{0.2}O₂, 4 Gew.-% Carbon Black und 5 Gew.-% PVdF eingesetzt. Auf diese Weise hergestellte Lithium-Metall-Batteriezellen wurden bei 60°C getestet.

Das elektrochemische Verhalten erfindungsgemäßer und nicht erfindungsgemäßer BatterieAufbauten ist in den Figuren 1 bis 5 dargestellt. Es zeigt die
- Figur 1 das Ergebnis eines Li-Plating/Stripping-Versuchs eines nicht erfindungsgemä-βen Zellaufbaus als Funktion der Zeit;
- Figur 2 das Ergebnis einer galvanostatischen Zyklisierung eines nicht erfindungsgemäßen Zellaufbaus als Funktion der Zeit;
- Figur 3 das Ergebnis eines Li-Plating/Stripping-Versuchs einmal eines nicht erfindungsgemäßen Zellaufbaus und einmal eines erfindungsgemäßen Zellaufbaus mit einem Dual-Salt Elektrolyten als Funktion der Zeit;
- Figur 4 das Ergebnis einer galvanostatischen Zyklisierung einmal nicht erfindungsgemäßer Zellaufbauten und einmal eines erfindungsgemäßen Zellaufbaus mit einem Dual-Salt Elektrolyten als Funktion der Zeit;
- Figur 5 das Ergebnis einer mechanischen Stabilitätstestung einmal eines nicht erfindungsgemäßen und einmal eines erfindungsgemäßen Zellaufbaus als Funktion der Druckauslenkung.

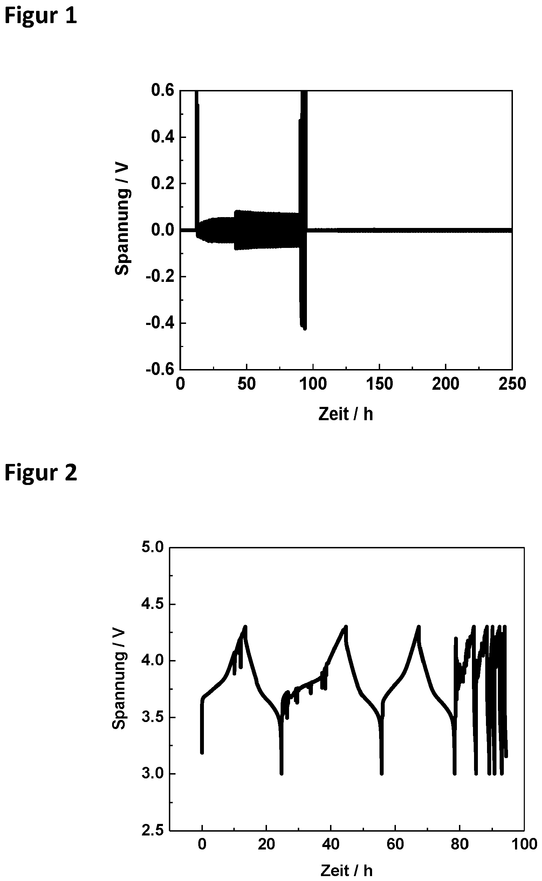

Die Figur 1 zeigt das Spannungsverhalten einer Li∥Li Zelle mit einem s-IPN ohne den Einsatz zweier unterschiedlicher Elektrolyten. Die beiden Li-Elektroden werden abwechselnd für jeweils eine Stunde als positive und negative Elektrode unter Einfluss eines konstanten Stroms von 50 µA/cm² eingesetzt, wodurch abwechselnd Li von einer zur anderen Seite durch den Elektrolyten transportiert wird. Die Zelle zeigt schon nach einer relativ kurzen Zeit von 100 h ein Zellversagen, welches auf einen Kurzschluss zurückzuführen ist.

Die Figur 2 zeigt das Spannungsverhalten einer konventionellen galvanostatischen Zyklisierung einer Li∥NMC622-Zelle mit eine Polymerelektrolyten aus PEO und Polycarbonat, allerdings nur mit einem Leitsalz (Li-TFSI) in einer Konzentration von 30 Gew.-% Leitsalz zum Gesamtgewicht des s-IPNs. Das Gewichtsverhältnis von PEO zu Polycarbonat beträgt hierbei 1 zu 4. Auch diese Zelle zeigt ebenfalls einen zeitabhängigen Fehler, ersichtlich durch das Rauschen in der Spannungskurve.

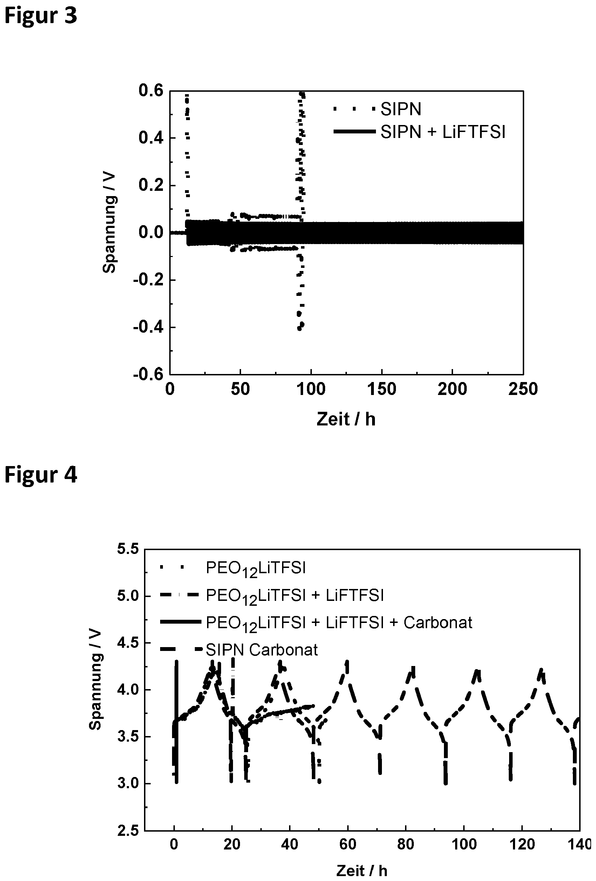

Die Figur 3 zeigt den Spannungsverlauf eines Li-Plating/Stripping-Versuchs als Funktion der Zeit, einmal für einen erfindungsgemäßen und einmal für einen nicht erfindungsgemäßen Zellaufbau. Es wurde derselbe Li∥Li-Zellaufbau mit denselben s-IPN aber einmal, erfindungsgemäß, mit Li-FTFSI/Li-TFSI als "dual salt"-Elektrolyten und einmal nur mit Li-TFSI als Elektrolyten gefahren. Es ist deutlich zu erkennen, dass der Doppelsalz-Ansatz mit Li-FTFSI und Li-TFSI deutlich länger und ohne Fehler läuft. Ohne durch die Theorie gebunden zu sein wird vermutet, dass die Li-Elektrode durch die Kombination des s-IPN mit Li-FTFSI und Li-TFSI stabilisiert wird.

Die Figur 4 zeigt das Ergebnis einer galvanostatischen Zyklisierung einer Li∥NMC622 Zelle mit unterschiedlicher Zusammensetzung der Festelektrolyte. Wird allein PEO und Li-TFSI eingesetzt (PEO₁₂LiTFSI), weist die Batteriezelle schon zu Anfang der Zyklisierung einen Defekt, vermutlich verursacht durch einen Kurzschluss, auf. Die Zugabe eines weiteren Leisalzes nur zu PEO als alleinigem Polymer (LiFTFSI + PEOizLiTFSI) zeigt keine signifikante Verbesserung des elektrischen Verhaltens und die Zelle fällt schon nach kurzer Zeit aus. Auch die Zugabe von Carbonat zu Li-FTFSI in PEO₁₂LiTFSI ohne Ausbildung eines semi-interpenetrierenden Netzwerkes, d.h. ohne Vernetzung der einzelnen Polycarbonat-Monomere, zeigt keine Verbesserung im elektrischen Verhalten. Einzig und allein die Kombination zweier unterschiedlicher Elektrolyte (Li-FTFSI und TFSI) und die Ausbildung eines semi-interpenetrierenden Netzwerkes aus PEO und vernetzten Polycarbonat, zeigt hingegen eine fehlerfreie Zyklisierung über die gesamte Messdauer.

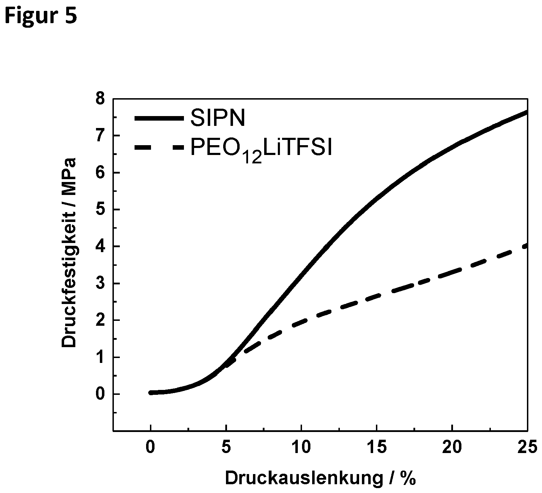

Die Figur 5 zeigt einen mechanischer Stabilitätstest eines erfindungsgemäßen und eines nicht erfindungsgemäßen Festelektrolyten. Durch den Einsatz erfindungsgemäßer Festelektrolyten mit einem sIPN aus vernetzten Polycarbonaten und unvernetzten PEO, zeigt sich im Vergleich nur zu einem PEO-Netzwerk eine signifikante Verbesserung der Druckfestigkeit. Die Druckfestigkeit wurde mittels eines Prüfstands zur Kompressibilität ermittelt, bei dem eine Polymerprobe von 2 mm Höhe und 18 mm Durchmesser zwischen zwei Edelstahlplatten unter konstantem Vorschub von 20 µm/min komprimiert und die dazu notwendige Kraft gemessen wird. Diese verbesserte Druckfestigkeit könnte zusammen mit dem Dual-Salt-Ansatz der Grund für die besserte Li-Kompatibilität und fehlerfreie Zyklisierung von Li∥NMC622 Zellen sein.

## Patentansprüche

1. Festelektrolyt für eine Alkalimetall-Feststoffbatterie,
**dadurch gekennzeichnet, dass**
der Festelektrolyt eine Mischung zweier unterschiedlicher Alkalimetall-Leitsalze und ein semi-interpenetrierendes Netzwerk (sIPN) aus einem vernetzten und einem nicht-vernetzten Polymer umfasst, wobei das semi-interpenetrierende Netzwerk
größer oder gleich 50 Gew.-% und kleiner oder gleich 80 Gew.-% eines nicht-vernetzten Polymers ausgesucht aus der Gruppe bestehend aus Polyethylenoxid (PEO), Polycarbonat (PC), Polycaprolacton (PCL), kettenendenmodifizierten Derivaten dieser Polymere oder Mischungen mindestens zweier Komponenten daraus; und
größer oder gleich 10 Gew.-% und kleiner oder gleich 50 Gew.-% eines Polycarbonats aus vernetzbaren Polyalkyl-Carbonat-Monomeren mit einer Kohlenstoffanzahl von größer oder gleich 2 und kleiner oder gleich 15 bezogen auf das einzelne Monomer als vernetztes Polymer umfasst, wobei das einzelne Polyalkyl-Carbonat-Monomer substituiert oder unsubstituiert sein kann und zwei vernetzbare Gruppen ausgesucht aus der Gruppe bestehend aus acryl, methacryl, epoxy, vinyl, isocyanid oder Mischungen zweier unterschiedlicher Gruppen daraus umfasst.

2. Festelektrolyt nach Anspruch 1, wobei der Gewichtsanteil des vernetzten zum unvernetzten Polymer im sIPN größer oder gleich 20 Gew.-% und kleiner oder gleich 40 Gew.-% beträgt.

3. Festelektrolyt nach einem der vorhergehenden Ansprüche, wobei das Molekulargewicht der Polyalkyl-Carbonat-Monomere größer oder gleich 100 g/mol und kleiner oder gleich 3500 g/mol beträgt.

4. Festelektrolyt nach einem der vorhergehenden Ansprüche, wobei die Polyalkyl-Carbonat-Monomere ausgesucht sind aus der Gruppe bestehend aus geradkettigen oder verzweigten, substituierten oder nicht-substituierten Polyethylen-, Polymethylen-, Polypropylen-, Polybutylen-, Polyhexylen-Carbonaten oder Mischungen mindestens zweier Komponenten daraus.

5. Festelektrolyt nach einem der vorhergehenden Ansprüche, wobei die Polyalkyl-Carbonat-Monomere jeweils zwei gleiche funktionelle Gruppen tragen und die funktionelle Gruppe eine Methacryl-Gruppe ist.

6. Festelektrolyt nach einem der vorhergehenden Ansprüche, wobei die Mischung zweier unterschiedlicher Alkalimetall-Leitsalze mindestens die Salze Alkali-(fluorosulfonyl)(tri-fluoromethansulfonyl)imide (FTFSI) und Alkali-bis(trifluoromethansulfonyl)imid) (TFSI) umfasst.

7. Festelektrolyt nach Anspruch 6, wobei das Gewichtsverhältnis von Alkali-(fluorosulfonyl)(trifluoromethansulfonyl)imide (FTFSI) zur Gewichtssumme aus den Komponenten des sIPN und dem weiteren Leitsalz, ausgedrückt als Gewicht des Alkali-FTFSI dividiert durch die Summe der Gewichte aus sIPN und weiteren Leitsalz, größer oder gleich 0,005 und kleiner oder gleich 0,1 beträgt.

8. Festelektrolyt nach einem der vorhergehenden Ansprüche, wobei der Festelektrolyt ein Festelektrolyt für eine Li-Feststoffbatterie ist.

9. Alkali-Metall-Batterie aufweisend eine Anode, eine Kathode und einen zwischen Anode und Kathode angeordneten Festelektrolyten, **dadurch gekennzeichnet, dass** der Festelektrolyt ein Festelektrolyt nach einem der Ansprüche 1-8 ist.

10. Batterie nach Anspruch 9, wobei die Batterie eine Li-Metall-Batterie ist und die Batterie mindestens eine Hochstrom- oder Hochspannungs-Elektrode aufweist.

## Claims

1. Solid electrolyte for an alkali metal solid state battery,
**characterized in that**
the solid electrolyte comprises a mixture of two different alkali metal conducting salts and a semi-interpenetrating network (sIPN) of a crosslinked and a non-crosslinked polymer, wherein the semi-interpenetrating network comprises
greater than or equal to 50 wt.-% and less than or equal to 80 wt.-% of a non-crosslinked polymer selected from the group consisting of polyethylene oxide (PEO), polycarbonate (PC), polycaprolactone (PCL), chain end modified derivatives of these polymers, or mixtures of at least two components thereof; and
greater than or equal to 10 wt.-% and less than or equal to 50 wt.-% of a polycarbonate of crosslinkable polyalkyl carbonate monomers having a carbon number greater than or equal to 2 and less than or equal to 15 based on the single monomer as the crosslinked polymer, wherein the single polyalkyl carbonate monomer may be substituted or unsubstituted and comprises two crosslinkable groups selected from the group consisting of acrylic, methacrylic, epoxy, vinyl, isocyanide or mixtures of two different groups thereof.

2. The solid electrolyte according to claim 1, wherein the weight fraction of crosslinked to uncrosslinked polymer in the sIPN is greater than or equal to 20 wt.-% and less than or equal to 40 wt.-%.

3. The solid electrolyte according to any one of the preceding claims, wherein the molecular weight of the polyalkyl carbonate monomers is greater than or equal to 100 g/mol and less than or equal to 3500 g/mol.

4. The solid electrolyte according to any one of the preceding claims, wherein the polyalkyl carbonate monomers are selected from the group consisting of straight-chain or branched, substituted or unsubstituted polyethylene, polymethylene, polypropylene, polybutylene, poly-hexylene carbonates or mixtures of at least two components thereof.

5. The solid electrolyte according to any one of the preceding claims, wherein the polyalkyl carbonate monomers each carry two identical functional groups and the functional group is a methacryl group.

6. The solid electrolyte according to any one of the preceding claims, wherein the mixture of two different alkali metal conducting salts comprises at least the salts alkali (fluorosulfonyl) (trifluoromethanesulfonyl)imide (FTFSI) and alkali bis(trifluoromethanesulfonyl)imide) (TFSI).

7. The solid electrolyte according to claim 6, wherein the weight ratio of alkali (fluorosulfonyl) (trifluoromethanesulfonyl)imide (FTFSI) to the weight sum of the components of sIPN and the further conducting salt, expressed as the weight of alkali FTFSI divided by the sum of the weights of sIPN and further conducting salt, is greater than or equal to 0.005 and less than or equal to 0.1.

8. The solid electrolyte according to any one of the preceding claims, wherein the solid electrolyte is a solid electrolyte for a Li-solid battery.

9. Alkali metal battery comprising an anode, a cathode, and a solid electrolyte disposed between the anode and the cathode, **characterized in that** the solid electrolyte is a solid electrolyte according to any one of claims 1-8.

10. The battery according to claim 9, wherein the battery is a Li metal battery and the battery comprises at least one high current or high voltage electrode.

## Revendications

1. Electrolyte solide pour une batterie à métal alcalin solide,
**caractérisé en ce que**
l'électrolyte solide comprend un mélange de deux sels conducteurs de métal alcalin différents et d'un réseau semi interpénétrant (sIPN) à base d'un polymère réticulé et d'un polymère non réticulé, où le réseau semi interpénétrant comprend
à plus de ou à 50 % en poids et moins de ou à 80 % en poids d'un polymère non réticulé choisi dans le groupe constitué de l'oxyde de polyéthylène (PEO), du polycarbonate (PC), du poly caprolactone (PCL), de dérivés modifiés en fin de chaine de ces polymères ou de mélanges d'au moins deux composants parmi eux ; et
à plus de ou à 10 % en poids et moins de ou à 50 % en poids d'un polycarbonate à base de monomères de poly alkyl carbonate réticulables avec un nombre d'atomes de carbone supérieur ou égal à 2 et inférieur ou égal à 15, par rapport au monomère individuel en tant que polymère réticulé, où le monomère poly alkyl carbonate individuel peut être substitué ou non substitué et comprend deux groupes réticulables choisis dans le groupe constitué des groupements acrylique méthacrylique, époxy, vinyle, iso cyanamide ou de mélanges de deux groupements différents parmi eux.

2. Electrolyte solide selon la revendication 1, dans lequel la proportion en poids de polymère réticulé sur le polymère non réticulé dans le sIPN est supérieure ou égale à 20 % en poids et inférieure ou égale à 40 % en poids.

3. Electrolyte solide selon l'une des revendications précédentes, dans lequel le poids moléculaire des monomères poly alkyl carbonates est supérieur ou égal à 100 g/mole et inférieur ou égal à 3500 g/mole.

4. Electrolyte solide selon l'une des revendications précédentes, dans lequel les monomères poly alkyl carbonates sont choisis dans le groupe constitué de polyéthylène carbonate, poly méthylène carbonate, polypropylène carbonate, polybutylène carbonate, poly hexylène carbonate linéaires ou ramifiés, substitués ou non substitués ou de mélanges d'au moins deux composés parmi eux.

5. Electrolyte solide selon l'une des revendications précédentes, dans lequel les monomères poly alkyl carbonates portent respectivement deux groupements fonctionnels identiques et le groupement fonctionnel est un groupement méthacrylique.

6. Electrolyte solide selon l'une des revendications précédentes, dans lequel le mélange de deux sels conducteurs de métal alcalin différents comprend au moins les sels fluoro sulfonyl trifluoro méthane sulfonyl imide alcalins (FTFSI) et bis trifluoro méthane sulfonyl imide alcalins (TFSI).

7. Electrolyte solide selon la revendication 6, dans lequel le rapport en poids de fluoro sulfonyl trifluoro méthane sulfonyl imide alcalins (FTFSI) sur la somme en poids des composants du sIPN et l'autre sel, exprimé sous forme de poids de FTFSI alcalin divisé par la somme des poids de sIPN et de l'autre sel conducteur est supérieur ou égal à 0,005 et inférieur ou égal à 0,1.

8. Electrolyte solide selon l'une des revendications précédentes, l'électrolyte solide étant un électrolyte solide pour une batterie solide au Li.

9. Batterie métal alcalin présentant une anode, une cathode et un électrolyte solide disposé entre l'anode et la cathode, **caractérisé en ce que** l'électrolyte solide est un électrolyte solide selon l'une des revendications 1 à 8.

10. Batterie selon la revendication 9, la batterie étant une batterie à métal Li et la batterie présentant au moins une électrode à courant élevé ou une électrode à haute tension.
